# EUROPÄISCHE PATENTSCHRIFT

(11) **EP 3 296 099 B1**
(45) Veröffentlichungstag und Bekanntmachung des Hinweises auf die Patenterteilung: **31.07.2019**
(21) Anmeldenummer: 17187733.5
(22) Anmeldetag: 24.08.2017
(51) Int. Cl.: B32B 5/02, B29C 70/88, B29C 70/02, F02C 7/25, F02K 1/82, B29K 105/04, C09D 5/18, H01B 7/295

(54) **VERFAHREN ZUR HERSTELLUNG EINES TRIEBWERKSBAUTEILS MITTELS EINES ROHLINGS AUS INTUMESZENTEM MATERIAL**
METHOD FOR PRODUCING AN ENGINE COMPONENT BY MEANS OF A BLANK FROM INTUMESCENT MATERIAL
PROCÉDÉ DE FABRICATION D'UN COMPOSANT DE PROPULSEUR AU MOYEN D'UNE ÉBAUCHE EN MATÉRIAU INTUMESCENT

(30) Priorität: 09.09.2016 DE 102016217227
(43) Veröffentlichungstag der Anmeldung: 21.03.2018
(73) Patentinhaber: Rolls-Royce Deutschland Ltd & Co KG, 15827 Blankenfelde-Mahlow (DE)
(72) Erfinder: KUBISCH, Thomas, 15713 Königs-Wusterhausen (DE); KAAK, Oliver, 14052 Berlin (DE)
(74) Vertreter: Maikowski & Ninnemann Patentanwälte Partnerschaft mbB

(56) Entgegenhaltungen:
- EP-A1- 1 106 744
- EP-A1- 2 788 183
- EP-A1- 2 946 925
- US-A1- 2014 140 809

## Beschreibung

Die Erfindung betrifft ein Verfahren gemäß Anspruch 1 zur Herstellung wenigstens eines Teils eines Triebwerksbauteils sowie ein Triebwerksbauteil gemäß Anspruch 13, bei dem zumindest ein Teil nach einem solchen Verfahren herstellt ist.

Im Triebwerksbereich ist die Verwendung von Schichtverbunden für die Herstellung von Triebwerksbauteilen üblich. Hier werden faserverstärkte Verbundwerkstoffe in unterschiedlichen Konfigurationen und für verschiedene Triebwerksbauteile verwendet, um die gewünschten Materialeigenschaften durch die Kombination unterschiedlicher Werkstoffe zu erreichen. Ein Schichtverbund, aus dem ein Triebwerksbauteil hergestellt ist, besteht dabei aus mindestens zwei Schichten unterschiedlichen Materials, die stoff- und/oder formschlüssig miteinander verbunden sind. Bei Triebwerksbauteilen ist es ferner bekannt, diese mehrlagigen Schichtverbunde mit wenigstens einer feuerhemmenden oder feuerfesten Schicht zu versehen, um eine vorgegebene Feuerbeständigkeit oder Feuerfestigkeit zu erreichen. Mit dem entsprechenden Triebwerksbauteil kann dann beispielsweise ein abgeschotteter Bereich definiert werden, um eine Feuerausbreitung innerhalb des Triebwerks zu vermeiden oder zumindest in Grenzen zu halten.

Insbesondere aus dem Baubereich ist es beim Brandschutz ferner bekannt, intumeszente und häufig porige Baustoffe zu verwenden, die unter Hitzeeinwirkung anschwellen oder aufschäumen und damit ihr Volumen im Brandfall erheblich vergrößern. Das intumeszente Material dient dabei beispielsweise dazu eine veraschende Isolationsschicht auszubilden, durch die die Sauerstoffzufuhr und damit eine Ausbreitung einer Flamme behindert ist. Durch das sich ausdehnende intumeszente Material kann ferner auch eine Versiegelung eines kritischen Bereichs erreicht werden, sodass sich in diesem eine Flamme nicht weiter ausbreiten kann. Schichtverbunde mit wenigstens einer Schicht mit einem intumeszenten, porigen Material sind dabei beispielsweise aus der AU 2006-235991 A1 oder der EP 0 949 313 B1 bekannt.

Die Verwendung intumeszenter Materialien im Triebwerksbereich ist bisher nicht üblich. Dementsprechend gibt es derzeit allenfalls rudimentäre Überlegungen, Triebwerksbauteile mit mindestens einer Schicht mit einem intumeszenten Material möglichst einfach kompakt und leicht herzustellen.

Beispielsweise beschreibt die EP 2 946 925 A1 ein Verfahren zur Herstellung einer feuerbeständigen Verbund-Elektrotafel zur Verwendung als Teil eines elektrischen Kabelbaums eines Fahrzeugs, insbesondere eines Triebwerks, bei dem eine Schichtstruktur gebildet wird, die unter anderem eine Brandschutzschicht aufweist, die ein faseriges, mit einem intumeszierenden Material imprägniertes Material aufweist.

Der Erfindung liegt daher die Aufgabe zugrunde, ein Herstellungsverfahren bereitzustellen, mit dem sich ein Triebwerksbauteil mit einem intumeszenten Material einfach herstellen lässt.

Diese Aufgabe wird mit einem Herstellungsverfahren nach Anspruch 1 gelöst.

Im Rahmen eines erfindungsgemäßen Herstellungsverfahrens wird wenigstens ein Teil eines Triebwerksbauteils mittels eines Rohlings aus einem intumeszenten Material hergestellt, das mindestens eine faserige Matrix aus organischen und/oder anorganischen Fasern und eine intumeszente Substanz enthält. Dabei ist vorgesehen, dass der Rohling aus dem intumeszenten Material mit einer dreidimensionalen Struktur erzeugt wird, die bereits hinsichtlich ihrer Konturen an die Konturen des herzustellenden Teils des Triebwerksbauteils angepasst ist. Der Rohling ist dabei aus einer Fasermatte aus intumeszenten Material hergestellt. Der die dreidimensionale Struktur aufweisende Rohling wird durch ein aushärtendes Harz imprägniert. Vor oder nach der Imprägnierung wird der Rohling mit wenigstens einem Trägermaterial, zum Beispiel einem Verbundlaminat (englisch: "composite laminate") oder Prepreg, verbunden, das ebenfalls bereits an die Konturen des herzustellenden Teils angepasst ist und zusammen mit dem hiermit verbundenen Rohling zumindest teilweise das Triebwerksbauteil bildet.

Die Erfindung geht damit von dem Grundgedanken aus, bereits frühzeitig einen Rohling aus dem intumeszenten Material anzufertigen, dessen Konturen dem herzustellenden Teil des Triebwerksbauteils entspricht. Bereits der Rohling aus dem intumeszenten Material weist somit entsprechende Aussparungen, Freischnitte, umgebogene Bereiche, Auftrennungen, Schnittstellen, Vertiefungen und/oder Vorsprünge auf, die an dem herzustellenden Triebwerksbauteil vorhanden sein müssen, zum Beispiel zur Verbindung und/oder Führung von weiteren Komponenten des Triebwerks. Dies schließt insbesondere die Integration von mechanischen und/oder elektrischen Anschlüssen in den Rohling ein. Erst danach wird der Rohling, der üblicherweise aus einem flexiblen intumeszenten Material hergestellt ist, mit dem üblicherweise strukturgebenden Trägermaterial des Triebwerksbauteils verbunden. Hierbei kann grundsätzlich vorgesehen sein, dass der Rohling lediglich an das Trägermaterial montiert und hieran beispielsweise mittels einer Verklebung fixiert wird. Alternativ ist in einer Variante vorgesehen, dass der Rohling zusammen mit dem wenigstens einen Trägermaterial einen Schichtverbund ausgebildet, in dem das wenigstens eine Trägermaterial und der Rohling über das zur Imprägnierung genutzte Harz stoff- und/oder stoffschlüssig miteinander verbunden sind. In dem derart hergestellten Schichtverbund ist dann eine Schicht mit dem intumeszenten Material des Rohlings sowie mindestens eine Schicht aus dem wenigstens einen Trägermaterial ausgebildet.

Das eingebrachte Harz respektive die eingebrachte Harzmasse wird insbesondere von dem intumeszenten Material aufgesaugt, da das intumeszente Material eine hohe Porosität hat, und damit das intumeszente Material von dem Harz durchtränkt wird, so dass das intumeszente Material - nach Aushärten des Harzes - abgedichtet ist. An dem Triebwerksbauteil kann dann mittels des intumeszenten, durch das Harz abgedichteten Materials eine versiegelte Schicht gebildet werden, welche gegen Fluideinwirkungen resistent ist. Das intumeszente Material weist beispielsweise eine Porosität von über 70%, insbesondere im Bereich von mehr als 85% oder etwa 90% auf. Das intumeszente Material liegt dabei beispielsweise im Rohzustand als Fasermatte, insbesondere filzartig als mattenartige Materiallage aus einem Faservliesstoff vor. Beispielsweise wird eine Materiallage aus Tecnofire® der Technical Fibre Products Ltd. verwendet.

Bei einem erfindungsgemäß hergestellten Triebwerksbauteil gast im Brandfall oder bei einer über einen kritischen Schwellwert ansteigenden Temperatur das Harz aus dem intumeszenten Material aus respektive vaporisiert und gibt das intumeszente Material somit frei, sodass es anschwellen oder aufschäumen kann, um brandhindernd oder feuerhemmend zu wirken. Dabei wird erst durch das ausgasende Harz eine Volumenvergrößerung der Schicht mit dem intumeszenten Material gestattet, da das Harz diese Schicht nicht mehr in ihrer Form hält. Zeitgleich oder nachfolgend zur Ausgasung des Harzes respektive zur Vaporisierung oder Verbrennung des Harzes erfolgt eine temperaturgetriebene Volumenvergrößerung des intumeszenten Materials. Derart kann beispielsweise durch das ausgasende Harz ein kontrolliertes Abflammen erreicht werden, bei dem in Harz getränktes Material des Triebwerksbauteils ähnlich einer Kerze abbrennt, bevor anschließend durch das (weitere) Aufquellen oder Aufschäumen des intumeszenten Materials eine Barriere erzeugt wird, die einer weiteren Flammenausbreitung entgegenwirkt. Die Schicht mit dem intumeszenten Material wirkt dabei im Brandfall oder bereits bei einer über einen kritischen Schwellwert ansteigenden Temperatur als eine Art Hitzeschild.

Die Fasermatte kann zur Erzeugung der dreidimensionalen Struktur bearbeitet worden sein. Beispielsweise sind hierfür Abschnitte der Fasermatte umgeformt, aufgetrennt und/oder entfernt worden, um hierüber bereits die Konturen des herzustellenden Teils des Triebwerksbauteils möglichst maßgenau nachzubilden.

Zur Erzeugung der dreidimensionalen Struktur können dabei alternativ oder ergänzend auch Abschnitte der Fasermatte miteinander vernäht und/oder verwoben werden. Bei üblichen intumeszenten Materialien mit einer faserigen Matrix, wie zum Beispiel Tecnofire® der Technical Fibre Products Ltd., ist es grundsätzlich möglich, zur Ausbildung komplexer dreidimensionaler Strukturen das Fasermaterial miteinander zu vernähen und/oder miteinander zu verweben. Beispielsweise können derart umgebogene, insbesondere umgefaltete Abschnitte der Fasermatte an anderen Abschnitten der Fasermatter festgelegt und derart in ihrer umgebogenen Lage fixiert werden.

In einer weiteren Ausführungsvariante sind zur Erzeugung der dreidimensionalen Strukturen Abschnitte einer Fasermatte mit Abschnitten eines weiteren intumeszenten Materials vernäht und/oder verwoben. Dieses weitere intumeszente Material wird beispielsweise durch eine zusätzliche Fasermatte bereitgestellt. Der Rohling aus intumeszentem Material wird hier folglich aus mehreren (mindestens zwei) Fasermatten oder hieraus herausgeschnittenen Abschnitten hergestellt.

In einer Ausführungsvariante wird der Rohling mittels eines Formwerkzeugs hergestellt, das hinsichtlich seiner Konturen an die Konturen des herzustellenden Teils des Triebwerksbauteils angepasst ist und an dem sich in einer Dispersion dispergierte Fasern für die faserige Matrix anlagern. Das genutzte Formwerkzeug bildet somit das herzstellende Teil des Triebwerksbauteils vorzugsweise exakt nach und ist dazu eingerichtet und vorgesehen, dass sich hieran das intumeszente Material anlagert, sodass nach einer Trocknung an dem Formwerkzeug der Rohling aus intumeszenten Material mit der gewünschten dreidimensionalen Struktur und den Bauteilkonturen vorliegt.

Das Formwerkzeug kann hierfür beispielsweise eine wasserdurchlässige Gitterstruktur oder Siebstruktur aufweisen. Derart kann das Formwerkzeug in die Dispersion eingetaucht oder hiervon durchströmt werden, wobei sich dann die organischen und/oder anorganischen Fasern mit der intumeszenten Substanz an dem Formwerkzeug anlagern. Die Dispersion kann hierbei eine mindestens die organischen und/oder anorganischen Fasern, die intumeszente Substanz und ein Bindemittel enthaltene wässrige Aufschlämmung sein. Diese wässrige Aufschlämmung kann beispielsweise eine Zusammensetzung aufweisen, wie sie in der EP 0 949 313 B1 beschrieben ist.

In dem intumeszenten Material des Rohlings und damit gegebenenfalls auch in einer wässrigen Aufschlämmung enthaltene organische Fasern umfassen z.B. Fasern aus Polyester, Nylon, Aramid, Acrylharz, Olefin oder Cellulose. Beispiele für anorganische Fasern sind Fasern aus Glas, Mineralwolle, Steinwolle, Schlackenwolle, Asbest, Keramik, Zirconiumioxid, Aluminiumoxid oder andere glasartige Synthesefasern.

Ein in dem intumeszenten Material des Rohlings und damit gegebenenfalls auch in einer wässrigen Aufschlämmung enthaltenes Bindemittel, beispielsweise ein elastomeres Bindemittel, ist beispielsweise ein Acryl-, Butadien-, Vinyl- oder Silikon-Polymer. Das intumeszente Material des Rohlings kann hierbei beispielsweise 2 Gew.-% bis 30 Gew.-% an Bindemittel aufweisen.

Die intumeszente Substanz kann beispielsweise schäumbarer Graphit, Vermiculit oder Perlit umfassen. Grundsätzlich kann der Rohling aus intumeszenten Material 10 Gew.-% bis 85 Gew.-% der intumeszenten Substanz enthalten.

In einer Variante des Herstellungsverfahrens werden der Rohling und das Trägermaterial vor der Imprägnierung aufeinandergeschichtet und es wird ein Druck aufgebracht, um das intumeszente Material des Rohlings zu komprimieren. Durch das aushärtende Harz wird dann das intumeszente Material in seiner komprimierten Form gehalten, strukturell gefestigt und gegen Eindringen von Fluiden oder Gasen abgedichtet.

Durch Komprimierung wenigstens der Materiallage des intumeszenten Materials wird erreicht, dass dieses vergleichsweise dünnschichtig an dem fertigen Triebwerksbauteil vorliegt, ohne hierbei auf einen effektiven Brandschutz verzichten zu müssen. Zudem wird für Abdichtung des intumeszenten Materials durch das Harz eine geringere Menge an Harz benötigt. Hiermit ist gegeben, dass eine äußere Schicht des Schichtverbundes weniger harzreich ist, da das intumeszente Material in dem fertiggestellten Schichtverbund üblicherweise eine Außenschicht auf der vor Feuer zu schützenden Seite bildet. Dies kann mit Blick auf eine geforderte Festigkeit und Steifigkeit des Triebwerksbauteils von Vorteil sein, insbesondere da hierdurch nur eine vergleichsweise dünne Schicht mit intumeszenten Material Verwendung finden muss und der zur Verfügung stehende Bauraum für die weitere, dann strukturtragende Schicht genutzt werden kann.

Das mindestens eine Trägermaterial ist in einer Ausführungsvariante durch einen Verbundwerkstoff gebildet. Beispielsweise ist hierbei eine Materiallage in Form eines Prepregs, also einem vorimprägnierten textilen Faser-Matrix-Halbzeug vorgesehen. Alternativ oder ergänzend kann eine Materiallage aus einem anderen faserverstärkten Material als Trägermaterial vorgesehen sein.

In einer Ausführungsvariante eines erfindungsgemäßen Verfahrens ist für die Imprägnierung mit dem Harz eine Erwärmung des Rohlings und des Trägermaterials bis wenigstens zu einer Mindesttemperatur vorgesehen. Die Erwärmung erfolgt hierbei zum Beispiel durch Erwärmung eines die aufeinandergeschichteten Materiallagen aufnehmenden Aufnahmeraumes des Werkzeugs. Dieser Aufnahmeraum ist beispielsweise durch eine Kavität in einer Formschale oder durch einen Autoklav definiert. Die Erwärmung dient beispielsweise zum Flüssighalten des eingebrachten Harzes oder zum Aushärten des Harzes bei einem warmhärtenden Harz.

Es sei an dieser Stelle bereits angemerkt, dass die Einbringung des Harzes beispielsweise durch eine separate Harzlage erfolgen kann. Eine solche Harzlage wird beispielsweise zwischen dem Trägermaterial und dem hierauf geschichteten Rohling vorgesehen. Alternativ kann eine Injektion des Harzes, beispielsweise im Wege eines Harzinjektionsverfahrens (englisch "(Resin Transfer Moulding", kurz "RTM") oder Vakuum unterstützt im Wege eines VARI- oder VARTM-Verfahrens erfolgen (kurz für Englisch "Vaccum Assisted Resin Injection" oder "Vacuum Assisted Resin Transfer Moulding"). Alternativ oder ergänzend kann bei einer Verwendung eines vorimprägnierten Prepregs das hierin enthaltene Harz im Zuge der Herstellung des Schichtverbundes durch Druckbeaufschlagung und Erwärmung verflüssigt und dann (auch) zur Durchtränkung des komprimierten intumeszenten Materials des Rohlings genutzt werden, der hierauf aufgeschichtet ist.

In einer Ausführungsvariante wird für die Imprägnierung eine Erwärmung auf eine Mindesttemperatur von etwa 70 °C vorgesehen, um zu erreichen, dass das Harz respektive die Harzmasse das komprimierte intumeszente Material ausreichend durchtränkt. Der weitere Herstellungsprozess kann vorsehen, dass zur die Temperatur nachfolgend stufenweise bis zu einer ersten Maximaltemperatur von etwa 120°C und anschließend bis zu einer zweiten Maximaltemperatur von etwa 175°C erhöht wird.

Um sicherzustellen, dass das intumeszente Material bereits auf eine gewünschte Dicke verdichtet ist, bevor das Harz in das intumeszente Material eindringt, ist in einer Variante vorgesehen, dass der Druck zum Komprimieren wenigstens der Materiallage des intumeszenten und vorzugsweise porigen Materials aufgebracht wird, bevor die Mindesttemperatur, von zum Beispiel 70 °C, erreicht ist. Hierfür kann der Druck aufgebracht werden, wenn eine Heizeinrichtung zum Erwärmen der Rohlings und des Trägermaterials auf die Mindesttemperatur aktiviert wird oder bevor eine solche Heizeinrichtung aktiviert wird. Der vorgesehene (Kompression-) Druck wird so zu demjenigen Zeitpunkt aufgebracht, an dem oder kurz nachdem die Heizeinrichtung aktiviert wird und damit ein Erwärmungsvorgang ausgelöst wird. Hierüber - wie auch bei einer nachgeschalteten Aktivierung der Heizeinrichtung - ist sichergestellt, dass der vorgegebene Druck in jedem Fall bereits auf die Materiallagen einwirkt, bevor die Mindesttemperatur erreicht ist.

In einer Ausführungsvariante liegt der vorgesehene (Kompression-) Druck zum Komprimieren wenigstens des intumeszenten Materials im Bereich von 5 bis 8 bar, insbesondere im Bereich von 5,5 bis 7,5 bar. Zum Beispiel ist ein Druck von etwa 7 bar vorgesehen.

Wie bereits vorstehend angesprochen, kann in einer Ausführungsvariante das zu Imprägnierung vorgesehene Harz als separate Materiallage vorgesehen werden. Das Harz wird hierbei beispielsweise als vergleichsweise dünne Schicht zwischen dem Rohling aus intumeszentem Materials und einer weiteren Materiallage aus einem Verbundwerkstoff vorgesehen, die als Trägermaterial dient. Bei anschließender Erwärmung und Kompression dringt dann das Harz in das intumeszente Material und den Verbundwerkstoff ein und verbindet diese. Ein solches Verfahren kann beispielsweise in einem Autoklav umgesetzt werden.

Alternativ oder ergänzend kann das Trägermaterial vorimprägniert sein und damit das zu Imprägnierung des intumeszenten, porigen Materials vorgesehene Harz zumindest teilweise aus dem vorimprägnierten Trägermaterial stammen. Insbesondere in diesem Zusammenhang kann sich gegebenenfalls die vorstehend erläuterte Variante, bei der der (Kompression-) Druck zum Komprimieren wenigstens des intumeszenten Materials frühzeitig aufgebracht wird, bevor eine Erwärmung erfolgt, als besonders vorteilhaft erweisen. Durch den frühzeitig aufgebrachten Druck kann ein Harz für die Konservierung der komprimierten Form des intumeszenten Materials und dessen Abdichtung in vergleichsweise geringer Menge vorgesehen werden und bereits frühzeitig in das intumeszente Material eindringen, bevor durch eine nachfolgende Erwärmung eine Verflüssigung des (zusätzlichen) Harzes aus dem vorimprägnierten Trägermaterial auftritt. Damit kann eine gegebenenfalls unerwünschte Vermischung unterschiedlicher Harze und mithin Harzsysteme innerhalb des Triebwerksbauteils effektiv vermieden werden.

Für eine stoffschlüssige Verbindung des Rohlings und des Trägermaterials kann in einer Ausführungsvariante mindestens eine Klebemittellage vorgesehen sein. Diese Klebemittellage kann ein - gegebenenfalls zusätzliches - Harz enthalten, das zur Imprägnierung des intumeszenten Materials zumindest teilweise genutzt wird.

In einem Ausführungsbeispiel ist als Werkzeug ein Autoklav genutzt, mittels dem Rohling und Trägermaterial miteinander als Laminat verbunden werden. In einer Variante kann in einem entsprechenden Autoklavenprozess ein Druck zum Komprimieren wenigstens des intumeszenten Materials mittels des Autoklaven aufgebracht werden. Ein hier vorgesehener Herstellungsprozess kann dann beispielsweise insbesondere einen Autoklavenzyklus vorgesehen, bei dem bereits frühzeitig der zur Komprimierung des intumeszenten Materials vorgesehene Druck aufgebracht wird, bevor eine Erwärmung erfolgt.

Das verwendete intumeszente Material ist beispielsweise derart gewählt und der hierauf aufgebrachte Druck derart hoch eingestellt, dass eine durch den ursprünglichen Rohling definierte Schicht mit dem intumeszenten, porigen Material in dem hergestellten Triebwerksbauteil eine Dicke von 2,3 mm nicht übersteigt. Insbesondere liegt eine (Schicht-) Dicke beispielsweise im Bereich von 0,4 mm bis 1,5 mm. Die Schicht komprimierten, intumeszenten Materials ist somit vergleichsweise dünn und in seinem komprimierten Zustand durch die Bindung mittels des Harzes arretiert, quasi "eingefroren". Durch die intumeszente Eigenschaft des Materials kann diese Schicht jedoch auf ein Vielfaches ihres Volumens anschwellen, um hierdurch eine feuerhemmende Barriere auszubilden.

Unabhängig von einer etwaigen Verdichtung des intumeszenten Materials oder des Rohlings vor einer stabilisierenden und versteifenden Harzimprägnierung ist in einer Ausführungsvariante vorgesehen, dass der Rohling eine Wanddicke von weniger als 4,2 mm aufweist. Derart kann auch ohne Kompression des intumeszenten Materials einer vergleichsweise dünnwandigen Schicht aus intumeszentem Material an dem herzustellenden Triebwerksbauteil bereitgestellt werden.

Ein erfindungsgemäßes Verfahren dient beispielsweise der Herstellung eines Triebwerksbauteils für ein Gasturbinentriebwerk. Ein solches Triebwerksbauteil kann beispielsweise ein Triebwerksgehäuse (auch als Gondel oder englisch "nacelle" bezeichnend), ein Fangehäuse, eine Wandung eines Bypasskanals oder ein Verkleidungsbauteil für die Einhausung mindestens einer Leitung und/oder einer elektronischen und/oder Fluid führenden Komponente und/oder Baugruppe innerhalb des Triebwerks sein.

Mögliche Ausführungsvarianten der erfindungsgemäßen Lösung sind anhand der beigefügten Figuren exemplarisch veranschaulicht.

Hierbei zeigen:
- Figur 1: schematisch und in Querschnittsansicht ein Gasturbinentriebwerk in Form eines Turbofan-Triebwerks;
- Figur 2: eine detailliertere Darstellung des Triebwerks der Figur 1 in perspektivischer Ansicht ohne Darstellung eines Triebwerksgehäuses;
- Figur 3: ein Triebwerksbauteil in Form einer Verkleidung in perspektivischer Einzelansicht;
- Figur 4: in perspektivischer Ansicht zwei Seitenteile, aus denen die Verkleidung der Figur 3 zusammengesetzt ist;
- Figur 5: ein Rohling aus einem intumeszenten Material für die Herstellung eines der Seitenteile der Figur 4 gewonnen aus einer Fasermatte intumeszenten Materials;
- Figur 6A: in perspektivischer Ansicht ein dem herzustellenden Seitenteil nachgebildetes Formwerkzeug mit einer Siebstruktur für die Herstellung des Seitenteils für die Durchführung einer alternativen Herstellungsvariante;
- Figur 6B: Veranschaulichung eines Eintauchens des Formwerkzeugs der Figur 6A in eine wässrige Aufschlämmung, die unter anderem organische und/oder anorganische Fasern, eine intumeszente Substanz sowie ein Bindemittel für den herzustellenden Rohling aufweist;
- Figur 6C: zwei mit jeweils in eine Dispersion eingetauchten Formwerkzeugen hergestellten Rohlingen aus intumeszentem Material für die beiden Seitenteile entsprechend der Figur 4;
- Figur 7: ein Ablaufdiagramm für eine Ausführungsvariante eines erfindungsgemäßen Herstellungsverfahrens;
- Figuren 8A-8C: schematisch unterschiedliche Ausführungsvarianten für weiterführende Prozessschritte in Varianten eines erfindungsgemäßen Herstellungsverfahrens unter Veranschaulichung unterschiedlicher Materiallagen zur Herstellung eines mehrlagigen Schichtverbunds aus dem Rohling und mindestens einem Trägermaterial;
- Figur 9: ein Diagramm, in dem ein Temperaturverlauf und ein Druckverlauf für eine mit einem Autoklav ausgeführte Variante eines erfindungsgemäßen Herstellungsverfahrens über der Zeit aufgetragen sind;
- Figur 10: schematisch eine weitere Ausführungsvariante für weiterführende Prozessschritte einer Variante eines erfindungsgemäßen Herstellungsverfahrens, bei dem eine separate Harzlage zwischen einer Materiallage des Rohlings aus intumeszenten Material und einer Materiallage aus einem Verbundwerkstoff als Trägermaterial zur Erzeugung eines Schichtverbunds und eines Teils eines Triebwerksbauteils verwendet werden.

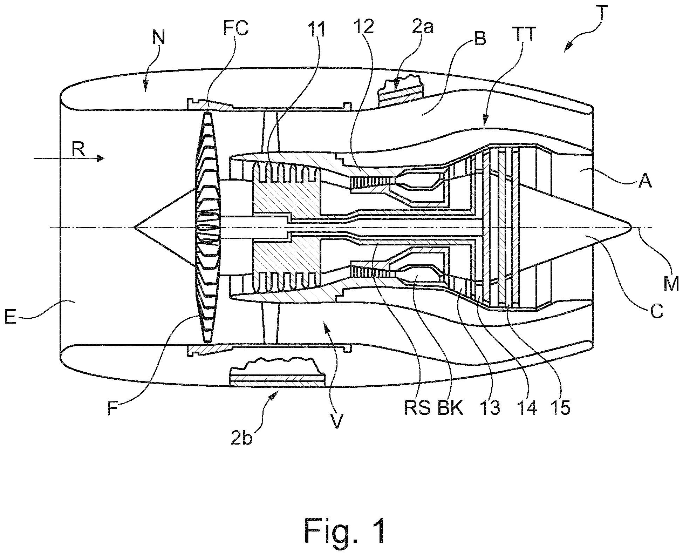

Die Figur 1 veranschaulicht schematisch und in Schnittdarstellung ein (Turbofan-) Triebwerk T, bei dem die einzelnen Triebwerkskomponenten entlang einer Rotationsachse oder Mittelachse M hintereinander angeordnet sind. An einem Einlass oder Intake E des Triebwerks T wird Luft entlang einer Eintrittsrichtung R mittels eines Fans F angesaugt. Dieser in einem Fangehäuse FC angeordnete Fan F wird über eine Rotorwelle RS angetrieben, die von einer Turbine TT des Triebwerks T in Drehung versetzt wird. Die Turbine TT schließt sich hierbei an einen Verdichter V an, der beispielsweise einen Niederdruckverdichter 11 und einen Hochdruckverdichter 12 aufweist, sowie gegebenenfalls noch einen Mitteldruckverdichter. Der Fan F führt einerseits dem Verdichter V Luft zu sowie andererseits einem Sekundärstromkanal oder Bypasskanal B zur Erzeugung des Schubs. Der Bypasskanal B verläuft hierbei um ein den Verdichter V und die Turbine TT umfassendes Kerntriebwerk, das einen Primärstromkanal für die durch den Fan F dem Kerntriebwerk zugeführte Luft umfasst. Nach außen wird der Bypasskanal B von einem Triebwerksgehäuse N begrenzt, das üblicherweise als Gondel (englisch: "nacelle") bezeichnet wird.

Die über den Verdichter V in den Primärstromkanal geförderte Luft gelangt in einen Brennkammerabschnitt BK des Kerntriebwerks, in dem die Antriebsenergie zum Antreiben der Turbine TT erzeugt wird. Die Turbine TT weist hierfür eine Hochdruckturbine 13, eine Mitteldruckturbine 14 und einen Niederdruckturbine 15 auf. Die Turbine TT treibt dabei über die bei der Verbrennung frei werdende Energie die Rotorwelle RS und damit den Fan F an, um über die die in den Bypasskanal B geförderte Luft den erforderlichen Schub zu erzeugen. Sowohl die Luft aus dem Bypasskanal B als auch die Abgase aus dem Primärstromkanal des Kerntriebwerks strömen über einen Auslass A am Ende des Triebwerks T aus. Der Auslass A weist hierbei üblicherweise eine Schubdüse mit einem zentral angeordneten Austrittskonus C auf.

Anhand der Figur 1 ist im Bereich des Triebwerksgehäuses N exemplarisch veranschaulicht, eine den Bypasskanal B berandende Wandung und/oder eine äußere Mantelfläche des Triebwerksgehäuse N über einen mehrlagig aufgebauten Schichtverbund 2a oder 2b aufzubauen. Eine den Bypasskanal B berandende Wandung kann hierbei zur Vermeidung einer Flammenausbreitung bei einem in dem Triebwerk T entstehenden Feuer mit einer feuerhemmenden oder feuerfesten Schicht versehen sein.

Gleiches gilt für eine Ummantelung des radial weiter innen liegenden Kerntriebwerks. Auch hier werden insbesondere Teile des Gehäuses aus einem Schichtverbund und damit aus einem Verbundwerkstoff hergestellt, wobei ein solcher Schichtverbund üblicherweise wenigstens eine Schicht aus einem feuerfesten oder zumindest feuerhemmenden Material aufweist.

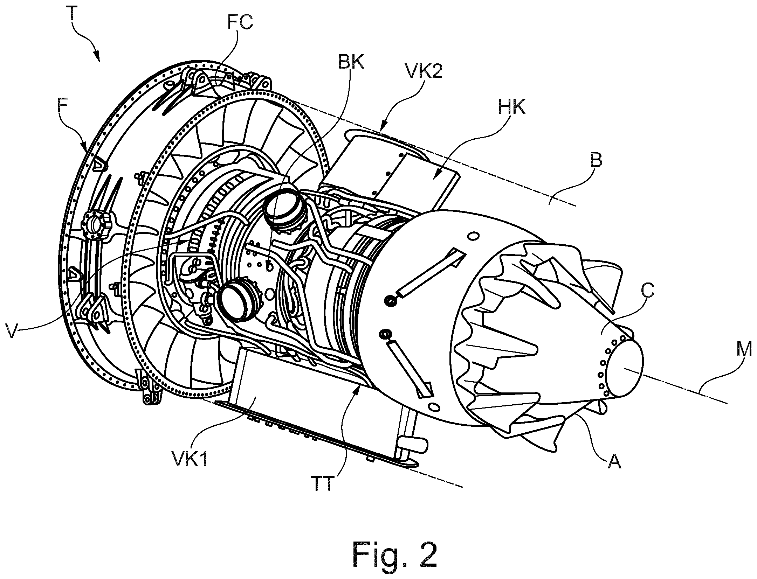

Anhand der Figur 2, in der das Triebwerk T der Figur 1 in perspektivischer Darstellung mit größerem Detaillierungsgrad und ohne dass Triebwerksgehäuse N dargestellt ist, werden exemplarisch weitere Triebwerksbauteile veranschaulicht, die aus einem Schichtverbund mit zumindest einer feuerfesten oder feuerhemmenden Schicht hergestellt sein können. Hierbei sei zum Beispiel verwiesen auf das Fangehäuse FC des Fans F sowie innerhalb des Bypasskanals B liegende Verkleidungen VK1 und VK2. Über die Verkleidungen VK1 und VK2 sind beispielsweise Leitungen und/oder elektronische Komponenten aerodynamisch eingehaust. Beispielsweise bildet ein Verkleidungsbauteil VK2 hierfür eine Hinterkante HK aus, die in Strömungsrichtung des in dem Bypasskanals B im Betrieb des Triebwerks strömenden Fluids spitz zuläuft. Die Verkleidungsbauteile VK1 und VK2 werden üblicherweise auch im englischen als "fairings" oder "splitter fairing" bezeichnet.

Alternativ oder ergänzend zu den vorstehend genannten Triebwerksbauteilen können auch Verkleidungen oder Gehäuse, die innerhalb eines Hohlraums in dem Triebwerksgehäuse N untergebracht sind, aus einem Schichtverbund hergestellt sein, der aus Brandschutzgründen mit einem feuerfesten oder feuerhemmenden Material versehen ist.

Grundsätzlich besteht bei allen Schichtverbunden im Triebwerksbereich das Bestreben, diese dünnwandig und vor allem leicht auszugestalten, ohne hierbei selbstverständlich auf einen effektiven Brandschutz verzichten zu müssen. In diesem Zusammenhang schlägt die erfindungsgemäße Lösung vor, ein intumeszentes Material in einen Schichtverbund eines oder mehrerer Triebwerksbauteile zu integrieren, um hierüber in einem Bereich des Triebwerks T einen effektiven Schutz im Fall eines Feuers oder bereits im Fall einer über einen kritischen Schwellwert hinaus ansteigenden Temperatur vor Flammenausbreitung und/oder hitzebedingten Schäden an Bauteilen zu vermeiden. Ein Vorteil eines hierbei verwendeten intumeszenten Materials, mit dem dann wenigstens eine Schicht eines mehrlagig aufgebauten Triebwerksbauteils gebildet wird, ist dabei, dass das intumeszente Material mit einer vergleichsweise dünnen (Wand- oder Schicht-) Dicke vorgesehen werden kann und erst im Brandfall oder zumindest bei über einen kritischen Schwellwert angestiegenen Temperatur die gewünschte Reaktion zeigt und unter Bildung einer Ascheschicht und/oder unter Versiegelung bestimmter Bereiche auf ein Vielfaches seines ursprünglichen Volumens anschwillt.

Bisher ist die Verwendung intumeszenter Materialien im Triebwerksbereich nicht üblich. Vielmehr werden z.B. intumeszente Fasermatten derzeit vor allem in Gebäuden verwendet. Mit der erfindungsgemäßen Lösung soll daher die Verwendung intumeszenter Materialien im Triebwerksbereich vereinfacht werden. Die nachstehend erläuterten Ausführungsvarianten eines erfindungsgemäßen Herstellungsverfahrens können dabei auch bei anderen Triebwerksbauteilen Anwendung finden, die mit einer Brandschutzschicht aus intumeszenten Material versehen werden sollen. Im Folgenden ist daher lediglich exemplarisch die Verkleidung VK1 und deren Herstellung näher veranschaulicht.

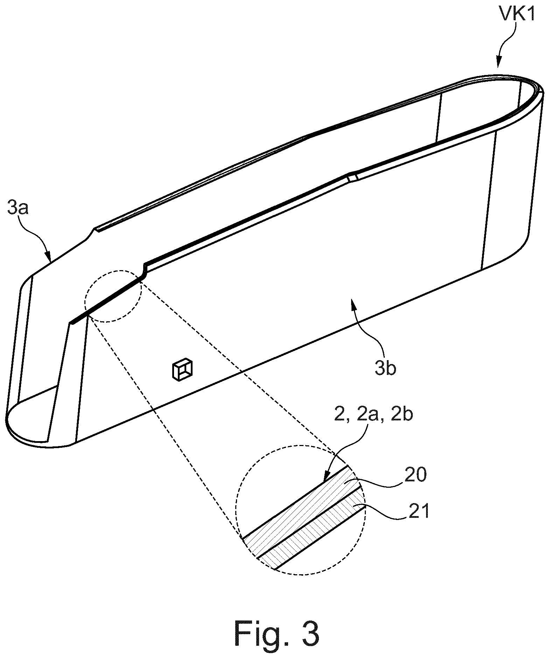

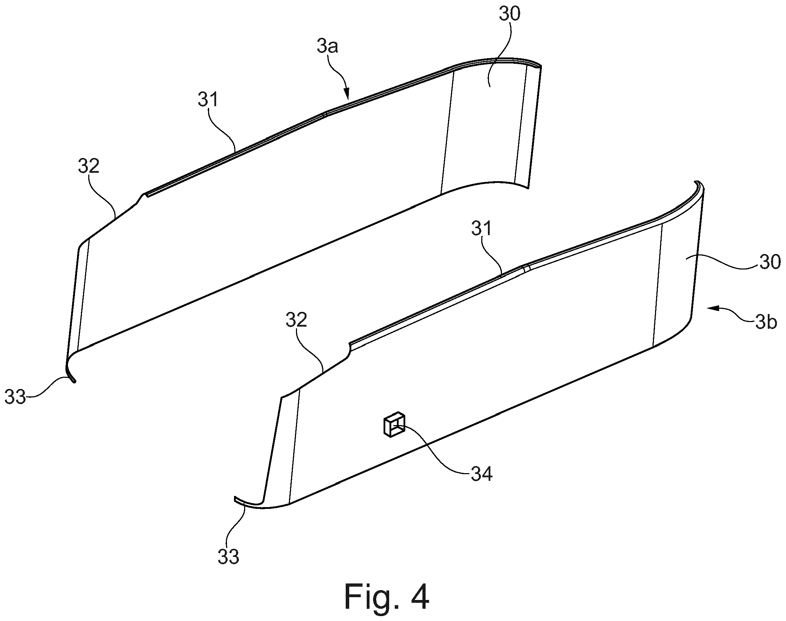

Die Figur 3 zeigt in perspektivischer Ansicht und Einzeldarstellung die Verkleidung VK1. Diese besteht vorliegend aus zwei länglichen, blechartigen Seitenteilen 3a und 3b. Diese in der Figur 4 einzeln dargestellten Seitenteile 3a und 3b sind beispielsweise zur Bildung der Verkleidung VK1 an einem vorderen und hinteren Ende aneinander fixiert, zum Beispiel miteinander verschweißt. Jedes der Seitenteile 3a und 3b bildet dabei an der fertiggestellten Verkleidung VK1 eine Seitenwandung aus, die einen Innenraum der Verkleidung VK1 berandet, in dem beispielsweise elektronische Komponenten und/oder Fluide führende Leitungen schützend aufgenommen sind.

In der fertiggestellten Verkleidung VK1 weist jedes der Seitenteile 3a, 3b eine vergleichsweise komplexe dreidimensionale Struktur mit ungeformten, freigeschnittenen und/oder vorstehenden Strukturabschnitten 30 bis 34 auf. Beispielsweise ist jedes Seitenteil 3a oder 3b mit einem gewölbten Endabschnitt 30, einem umgebogenen Randabschnitt 31, einem freigeschnittenen Randabschnitt 32, einem stegartig vorspringenden Verbindungsabschnitt 33 und einem Anschlussabschnitt 34 mit einer Durchgangsöffnung versehen. Die vorgenannten Abschnitte 30 bis 34 bilden somit Strukturabschnitte des jeweiligen Seitenteils 3a, 3b, über die dem jeweiligen Seitenteils 3a oder 3b eine komplex dreidimensionale Kontur gegeben ist. Die nachträgliche Anbringung einer Schicht aus intumeszenten Material oder einzelner Stücke aus intumeszenten Material hieran ist damit vergleichsweise aufwendig und mit hohem Montageaufwand verbunden.

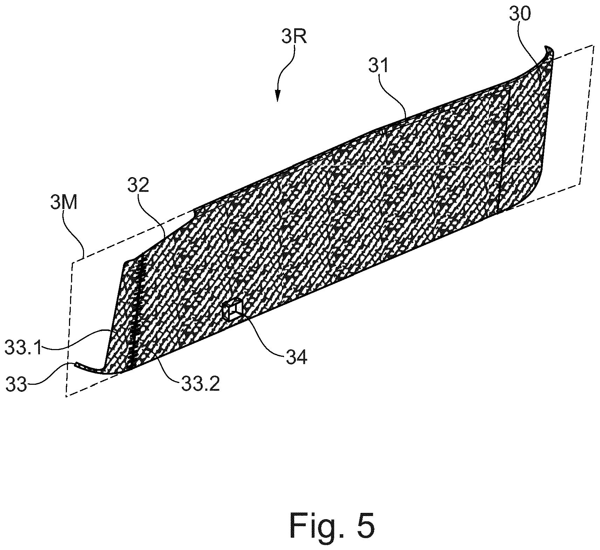

In einer Ausführungsvariante ist nun beispielsweise vorgeschlagen, vorab einen Rohling 3R aus intumeszenten Material entsprechend der Figur 5 vorzufertigen, an dem bereits die Konturen des herzustellenden Seitenteils 3b nachgebildet sind und der mit einem Trägermaterial für die erforderliche Steifigkeit, zum Beispiel einem faserverstärkten Verbundlaminat, verbunden wird. Vor oder nach der Verbindung mit dem Trägermaterial, das hier dann ebenfalls bereits an die Konturen des herzustellenden Seitenteils 3b angepasst ist, wird der Rohling durch ein aushärtendes Harz imprägniert. Durch das Harz, das beispielsweise zwischen einer durch den Rohling 3R gebildete Materiallage und dem Trägermaterial vorgesehen wird oder in einem RTM-, VARI- oder VARTM-Verfahren eingebracht wird, respektive die jeweilige Harzmasse können auch der Rohling 3R und das Trägermaterial form- und/oder stoffschlüssig miteinander zu einem Schichtverbund verbunden werden.

Der vorgefertigte Rohling 3R der Figur 5 ist aus einem hier im Wesentlichen rechteckförmigen Stück Fasermatte 3M hergestellt. In dieser Fasermatte 3M, die in der Figur 5 gestrichelt dargestellt ist, werden die Abschnitte 30 bis 34 des herzustellenden Seitenteils 3b nachgebildet. Hierfür wurden beispielsweise Bereiche weggeschnitten und mithin entfernt, Bereiche umgebogen und/oder miteinander vernäht oder verwoben. Im Bereich der Strukturabschnitte 33 und 32 ist z.B. eine Verbindungsstelle 33.2 in Form einer durchgehenden Naht vorgesehen, um ein abgewinkeltes Teilstück 33.1 der Fasermatte 3M, mittels dem später der Strukturabschnitt 33 an dem Seitenteil 3b ausgebildet wird, in der veränderten räumlichen Lage zu arretieren.

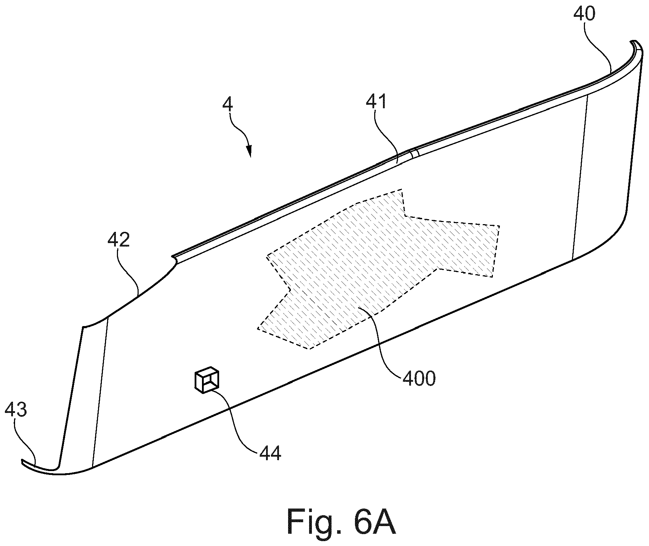

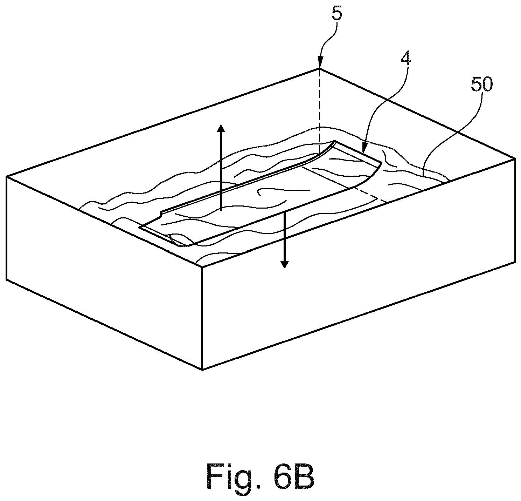

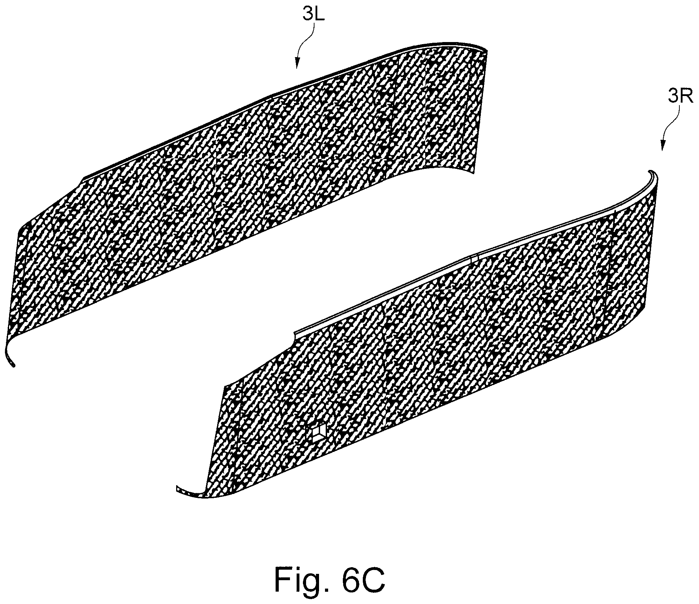

Bei der nachfolgenden, anhand der Figuren 6A, 6B und 6C veranschaulichten alternativen Ausführungsvariante erfolgt die Herstellung von Rohlingen 3R, 3L aus intumeszenten Material für die beiden Seitenteile 3a und 3b nicht unter Nutzung eines vorgefertigten Halbzeugs, wie zum Beispiel der Fasermatte 3M. Vielmehr wird hier direkt mittels eines Formwerkzeugs 4 und einer Dispersion 50 der jeweilige Rohling 3R, 3L mit der gewünschten Kontur gewonnen.

Ein exemplarisch in der Figur 6A dargestelltes Formwerkzeug 4 bildet dabei dementsprechend exakt das herzustellende Seitenteil nach - hier das Seitenteil 3b. Dementsprechend weist auch das Formwerkzeug 4 strukturgebende Abschnitte 40 bis 44 auf, die den einzelnen Strukturabschnitten 30 bis 34 des Seitenteils 3b entsprechen. Das Formwerkzeug 4 ist wasserdurchlässig und hierfür mit einer Gitter- oder Siebstruktur 400 ausgebildet. Anhand der Figur 6A ist dabei exemplarisch ein Formwerkzeug mit einer Siebstruktur veranschaulicht. Hierfür ist das flächige Material des Formwerkzeugs durchgängig mit Perforationen versehen, durch die Wasser abfließen kann.

Zur Herstellung des Rohlings 3R wird das wasserdurchlässige Formwerkzeug 4 entsprechend der Figur 6B in eine Dispersion 50 eingetaucht, die in einem Behältnis 5 vorgehalten wird. Die Dispersion 50 ist hierbei eine wässrige Aufschlämmung, die beispielsweise neben organischen und/oder anorganischen Fahrern, eine intumeszente Substanz sowie ein Bindemittel enthält. Mögliche Zusammensetzungen der Dispersion 50 können dabei beispielsweise der EP 0 949 313 B1 entnommen werden. In der Dispersion sind beispielsweise organische Fasern aus Polyester, Nylon, Aramid, Acrylharz, Olefin oder Cellulose und/oder anorganische Fasern aus Glas, Mineralwolle, Steinwolle, Schlackenwolle, Asbest, Keramik, Zirconiumioxid, Aluminiumoxid oder andere glasartige Synthesefasern dispergiert. Als Bindemittels ist beispielsweise ein Acryl-, Butadien-, Vinyl- oder Silikon-Polymer enthalten sowie als intumeszente Substanz beispielsweise schäumbarer Graphit, Vermiculit oder Perlit.

An dem in die Dispersion 50 eingetauchten Formwerkzeug 4 lagern sich die Bestandteile des intumeszenten Materials an, wobei bei einem entnehmen des Formwerkzeugs 4 aus dem Behältnis 5 über die Siebstruktur 400 des Formwerkzeugs 4 überschüssige Flüssigkeit abfließen kann. Nach einer Trocknungsphase kann somit von dem Formwerkzeug 4 der Rohling 3R aus intumeszenten Material entnommen werden, der hinsichtlich seiner Konturen bereits an die Konturen des herzustellenden Seitenteils 3b angepasst ist und damit unmittelbar an einen Trägermaterial für das Seitenteil 3b angebracht oder hiermit zu einem Schichtverbund verbunden werden kann.

Zur Stabilisierung und Abdichtung des intumeszenten Materials des Rohlings 3R - oder des analog hergestellten und in der Figur 6C ebenfalls dargestellten Rohlings 3L - ist eine Imprägnierung mit Harz vorgesehen. Hierbei kann der Rohling 3R, 3L, der üblicherweise eine Wanddicke von nicht mehr als 4,2 mm aufweist, beispielsweise in einem Autoklav mit Harz imprägniert werden. Zur Erzielung einer geringeren Schichtdicke an dem fertiggestellten Seitenteil 3b oder 3a kann das Material des jeweiligen Rohlings 3R oder 3L vor der Hartz-Imprägnierung auch komprimiert werden. Das Harz hält dann das komprimierte intumeszente Material in seiner komprimierten Form und dichtet dieses gegen das Eindringen von Flüssigkeiten ab. Bei einer entsprechenden Komprimierung kann dabei die Dicke einer Schicht, die aus dem Rohling 3R oder 3L aus intumeszenten Material gebildet wird, im Bereich von 0,4 mm bis 1,5 mm liegen, jedenfalls unterhalb von 2,3 mm, insbesondere von unter 2 mm.

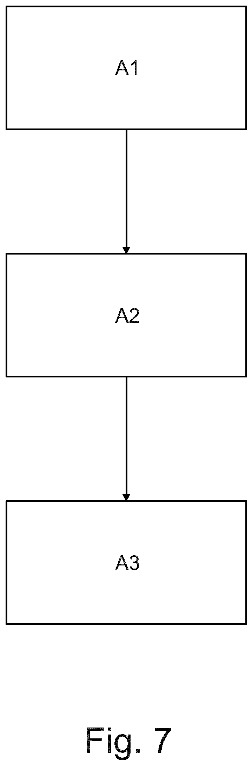

Der grundsätzliche Ablauf der mit den Figuren 5 und 6A bis 6C dargestellten Ausführungsvarianten für die Herstellung und Nutzung eines Rohlings ist anhand des Ablauf Diagramms der Figur 7 nochmals verdeutlicht.

In einem ersten Verfahrensschritt wird der 3D-Rohling 3L, 3R aus dem intumeszenten Material erzeugt, entweder durch schneiden, biegen und/oder nähen der aus einem intumeszenten Material gebildeten, flexiblen Fasermatte(n) 3M oder durch Eintauchen des Formwerkzeugs 4 in die wässrige Aufschlämmung, die die Bestandteile des intumeszenten Materials enthält. In einem nachfolgenden Verfahrensschritt A2 wird der jeweilige Rohling 3R, 3L mit einem Trägermaterial kombiniert, um hiermit einen Schichtverbund herzustellen, der eine Schicht mit intumeszenten Material enthält. Optional ist hierbei eine Kompression des intumeszenten Materials vorgesehen, um dieses zu verdichten und eine geringere Schichtdicke zu erzielen. In einem anschließenden Verfahrensschritt A3 erfolgt dann eine Imprägnierung übereinandergeschichteter Materiallagen, die durch das Trägermaterial und den jeweiligen Rohling 3L, 3R gebildet werden.

Wie dabei insbesondere anhand der Figuren 3 bis 5 und 6C verdeutlicht ist, bildet bereits der aus dem intumeszenten Material vorgefertigte Rohling 3R oder 3L vorliegend über die Strukturabschnitte 30 bis 33 Schnittstellen für die Verbindung mit dem anderen Seitenteil 3a oder 3b und das Zusammensetzen der Verkleidung VK1 aus. Ebenso ist an einem Rohling 3R, 3L bereits der Rand einer Durchgangsöffnung für die Durchführung von weiteren Komponenten in das Innere der Verkleidung VK1 ausgebildet (an einem in den vorgenannten Figuren linken Ende der Verkleidung VK1). Ferner ist in dem jeweiligen Rohling 3R, 3L auch bereits mindestens eine Anschlussöffnung oder Anschlussschnittstelle für die mechanische und/oder elektrische Verbindung eines weiteren Triebwerksbauteils an einem Anschlussabschnitt 34 ausgebildet ist, bevor die Kombination mit dem Trägermaterial und die Imprägnierung mit dem Harz erfolgt.

Über die Verwendung eines intumeszenten Materials wird in einem Schichtverbund eines Teils eines Triebwerksbauteils, wie den Seitenteilen 3a und 3b, der vorzugsweise mehrere Verbundwerkstoffe integriert, mindestens eine Schicht vorgesehen, die bei über einen Schwellwert ansteigenden Temperatur (z.B. von 195°C) und insbesondere bei einem Feuer innerhalb des Triebwerks T um ein Vielfaches ihres ursprünglichen Volumens ansteigt und hierdurch eine isolierende Schicht nach Art eines Hitzeschild bereitstellt und/oder durch ihre Volumenvergrößerung Bereiche gezielt verschließt, sodass sich eine Flamme nicht ohne weiteres in diese Bereiche hinein ausbreiten kann.

Um in diesem Zusammenhang eine durch den Rohling 3R, 3L bereitgestellte Schicht besonders dünn ausbilden ist, wie bereits vorstehend erläutert, in einer Variante vorgesehen, einen mit dem Rohling 3R, 3L gebildeten Schichtverbund in komprimierter Form mit einem Harz zu imprägnieren und hierbei über das Harz in seiner komprimierten Form zu halten und abzudichten. Dabei werden im Folgenden mögliche weiterführende Prozessschritte veranschaulicht, bei denen repräsentativ für einen beliebigen 3D-Rohling 3L, 3R aus intumeszenten Material, der bereits an die Konturen des hiermit herzustellenden Teils des Triebwerksbauteils angepasste Konturen aufweist, eine Materiallage 21' dargestellt ist. Ein mögliches Trägermaterial wird durch Materiallagen 20', 20a', 20b', 23' repräsentiert.

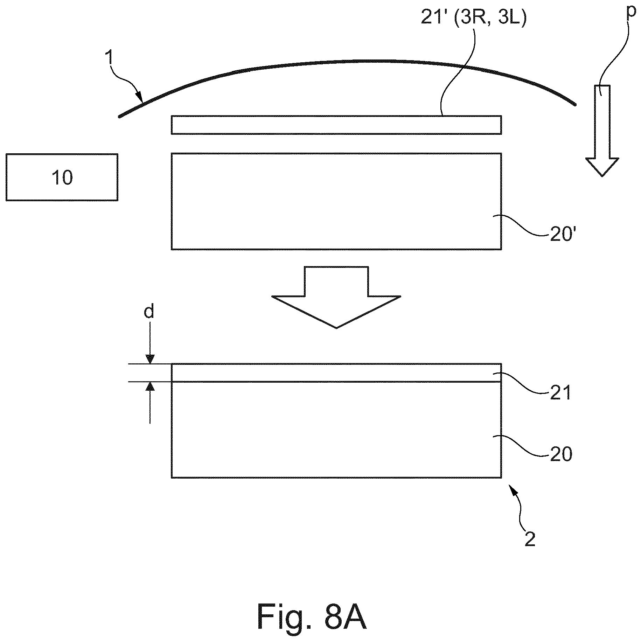

In einer anhand der Figur 8A veranschaulichten Variante für weiterführende Prozessschritte ist dabei vorgesehen, dass eine Materiallage 21' aus intumeszenten Material in einem Werkzeug 1 auf eine Verbundwerkstofflage 20', zum Beispiel mit Faserverstärkung, gelegt wird. Anschließend wird mittels des Werkzeugs 1 ein erhöhter Druck p zur Komprimierung der aufeinandergeschichteten Materiallagen 20' und 21' aufgebracht. Hierbei wird insbesondere die Materiallage aus intumeszenten Material 21' komprimiert.

Anschließend wird über ein Harz aus einer Harzzufuhr 10 des Werkzeugs 1 zur Imprägnierung der komprimierten Materiallagen 20' und 21' eingebracht. Insbesondere das vorzugsweise hochporige intumeszente Material der Materiallage 21' wird jeweils mit dem Harz gefüllt, sodass nicht nur die beiden Materiallagen 20' und 21' über das Harz stoffschlüssigen miteinander verbunden sind, sondern auch die Materiallage 21' des intumeszenten Materials in ihrer komprimierten Form gehalten und abgedichtet ist. Das ausgehärtete Harz konserviert somit die komprimierte Form des intumeszenten Materials und dichtet dieses insbesondere gegen das Eindringen von Flüssigkeiten nach außen ab. Das Einbringen des Harzes über die Harzzufuhr 10 erfolgt beispielsweise nach Art eines Harzinjektionsverfahrens (RTM-Verfahrens) oder Vakuum unterstützt in einem VARI- oder VARTM-Verfahren.

Für die Bereitstellung einer Materiallage 21' aus einem intumeszenten, hochporigen Material bietet sich Beispiel Tecnofire® der Technical Fibre Products Ltd. an. Jedoch sind auch grundsätzlich andere intumeszente Materialien geeignet, insbesondere solche die filzartig und in Form eines flexiblen Faservliesstoffes vorliegen oder als solches aus einer Dispersion 50 gewonnen werden können.

Bei einem entsprechend der Variante der Figur 8A durchgeführten Herstellungsverfahren liegt am Ende ein Schichtverbund 2 vor, in dem mehrere Schichten 20 und 21 untereinander verbunden vorliegen. Hierbei ist eine Verbundwerkstoffschicht 20, die üblicherweise auch als Verbundlaminat (englisch "composite laminate") bezeichnet wird, für die Bereitstellung der gewünschten strukturellen Eigenschaften wie Steifigkeit und Festigkeit vorgesehen. Die mindestens eine zusätzliche Schicht 21 mit dem komprimierten intumeszenten Material dient dem Brandschutz. Diese Schicht 21 ist vergleichsweise dünnwandig und weist lediglich eine (Schicht-) Dicke von unter 2 mm, zum Beispiel eine Dicke im Bereich von 0,4 mm bis 1,5 mm, auf.

Bei einer über einen Schwellwert, zum Beispiel in Höhe von etwa 195°C, ansteigenden Temperatur im Bereich der mit dem intumeszenten Material versehenen Schicht 21 oder einer Flammenbildung in diesem Bereich gast das ausgehärtete Harz des Schichtverbunds 2 aus. Das intumeszente Material der Schicht 21 wird dann über das Harz nicht mehr in seiner komprimierten Form gehalten und kann temperaturbedingt (zusätzlich) anschwellen oder aufschäumen. Die hiermit verbundene Volumenvergrößerung der mit dem intumeszenten Material versehenen Schicht 21 kann nach Art eines Hitzeschilds als feuerhemmende oder feuerfeste Barriere dienen. Alternativ oder ergänzend kann über die Volumenvergrößerung ein Bereich des Triebwerks T abgeschottet werden, in Abhängigkeit davon, welches Triebwerksbauteil aus dem Schichtverbund 2 hergestellt wird.

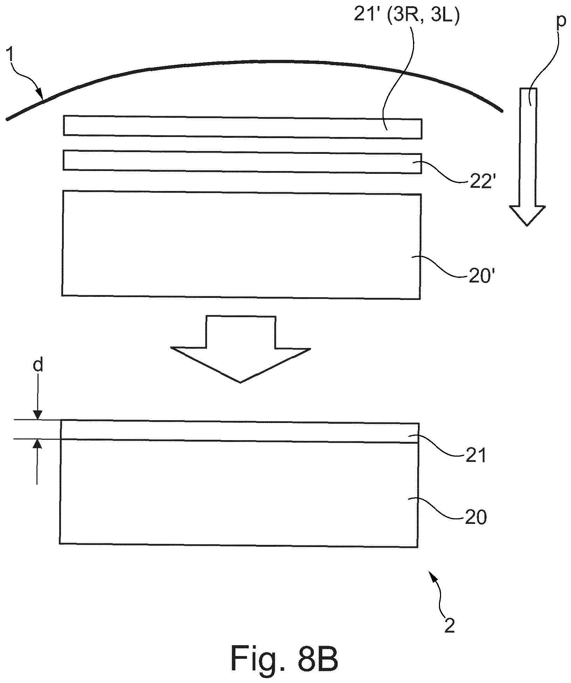

Bei der Variante der Figur 8B wird zur Imprägnierung und Abdichtung der komprimierten Materiallage 21' aus intumeszenten, porigen Material eine separate Klebemittellage 22' verwendet. Diese Klebemittellage 22' wird bei der Herstellung des Schichtverbunds 2 zwischen der Materiallage 21' des intumeszenten Materials und der Verbundwerkstofflage 20' vorgesehen. Durch den mittels des Werkzeugs 1 aufgebrachten Druck p und entsprechende Erwärmung dringt das Harz der Klebemittellage 22' in die komprimierte Materiallage 21' des intumeszenten Materials ein und stellt gleichzeitig eine stoffschlüssige Verbindung zwischen dieser Materiallage 21' und der Verbundwerkstofflage 20' sicher. Der Schichtverbund 2 wird hier somit mittels der Klebemittellage 22' im Wege einer sogenannten Nass-in-nass- oder Hart-in-nass-Verklebung (englisch auch als "Co-curing" oder "Co-bonding" bezeichnet) mit den unterschiedlichen Materiallagen 20' und 21' hergestellt. Durch den hierbei bereits anfänglich aufgebrachten Druck p - zum Beispiel in Höhe von etwa 7 bar - wird dabei eine frühzeitige Kompression des intumeszenten Materials erreicht, wodurch die Harzmenge für dessen Imprägnierung vergleichsweise gering gehalten werden kann.

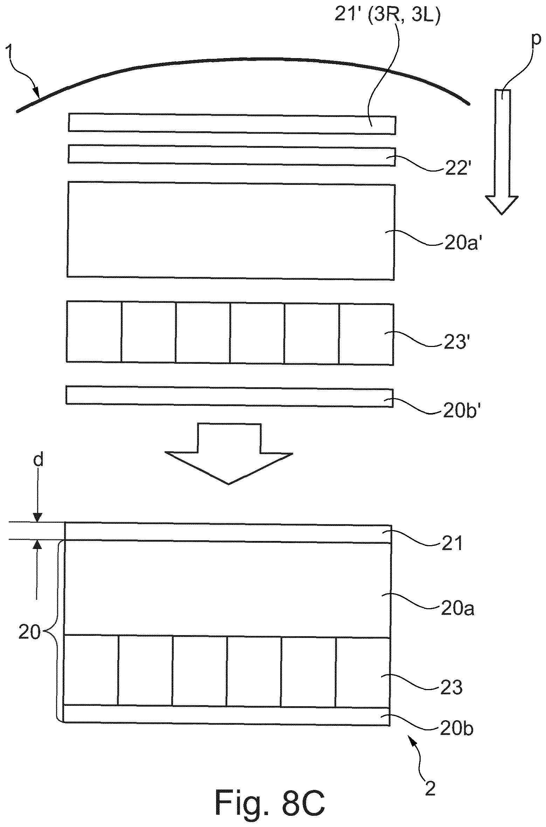

Bei der Variante der Figur 8C ist zusätzlich zu der Klebemittellage 22' eine Wabenlage 23' vorgesehen. Diese Wabenlage 23' dient der Bildung einer Wabenstrukturschicht 23 mit mehreren nebeneinander liegenden Waben in dem herzustellenden Schichtverbund 2. Über eine solche Wabenstrukturschicht 23 ist beispielsweise eine bessere Geräuschdämpfung erzielbar, wodurch sich ein entsprechend hergestellter Schichtverbund insbesondere für die Herstellung einer Innenfläche eines Triebwerksgehäuses N eignet. Die Wabenlage 23' ist hierbei zwischen zwei separaten Verbundwerkstofflagen 20a' und 20b' vorgesehen. Die Klebemittellage 22' ist dabei zwischen der einen separaten Verbundwerkstofflage 20a' und der Materiallage 21' aus intumeszenten Material vorgesehen.

In allen drei vorstehend erläuterten Varianten der Figuren 8A, 8B und 8C wird über die weiterführenden Prozessschritte ein Schichtverbund 2 bereitgestellt, bei dem eine äußere Schicht 21 mit intumeszenten Material über das ausgehärtete Harz in einer verdichteten und abgedichteten Form vorliegt. Die vergleichsweise dünne Schicht 21 mit intumeszenten Material ist hierbei durch das ausgehärtete Harz zudem vergleichsweise steif, gleichwohl die ursprünglich verwendete Materiallage 21' des Rohlings 3L, 3R flexibel ist und zum Beispiel als Faservliesstoffes zur Verfügung gestellt wird.

Im Übrigen ist beachtlich, dass bei einer Verwendung einer vorimprägnierten Verbundwerkstofflage 20' oder 20a', 20b' über eine frühzeitige Aufbringung des Druckes p erreicht werden kann, dass sich das zur Imprägnierung des komprimierten, intumeszenten Materials vorgesehene Harz nicht oder kaum mit einem für die Vorimprägnierung genutzten Harzes der jeweiligen Verbundwerkstofflage 20' oder 20a', 20b' vermischt.

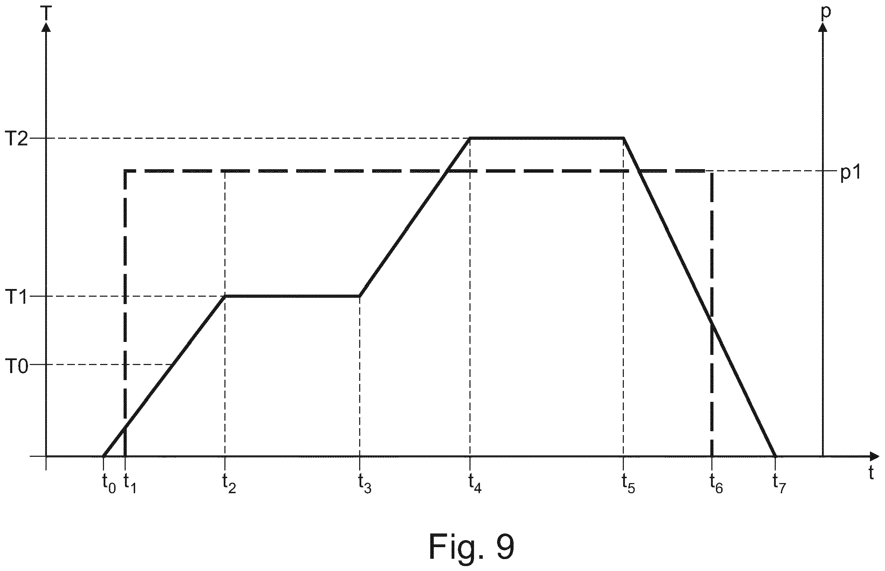

Mit dem Diagramm der Figur 9 sind beispielhaft Temperatur- und Druckverläufe für einen weiterführenden Prozessschritt eines Herstellungsprozess veranschaulicht, mit dem aus aufeinandergeschichteten Materiallagen ein Schichtverbund 2 gewinnen wird. In dem Diagramm der Figur 9 ist dabei sowohl eine Temperatur T als auch ein Druck p über die Zeit t aufgetragen. Die Figur 9 veranschaulicht hierbei zum Beispiel einen Autoklavenprozess für die Herstellung eines Schichtverbundes 2.

Gleich zu Beginn des anhand der Figur 9 veranschaulichten Herstellungsprozesses, zu einem Zeitpunkt t₀, wird eine Heizeinrichtung gestartet und damit die Temperatur innerhalb des als Werkzeug 1 dienenden Autoklaven zunehmend erhöht. Mit Aktivierung der Heizeinrichtung wird zum Komprimieren der aufeinander geschichteten Materiallagen und insbesondere der Materiallage 21' aus intumeszenten, porigen Material ein über den Umgebungsdruck liegender (Kompression-) Druck p1 aufgebaut. Der Druck p1 liegt dabei bereits zu einem Zeitpunkt t₁ an, bevor die Temperatur über einen Mindestschwellwert T0 angestiegen ist, an dem das verflüssigte oder flüssiggehaltene Harz die Poren des komprimierten, intumeszenten Materials zu füllen beginnt.

Der Druck p1 auf die aufeinandergeschichteten Materiallagen wird über einen Großteil des Herstellungszyklus in einem Zeitraum t₁ bis t₆ aufrechterhalten, in dem die Temperatur zunächst bis zu einer ersten Maximaltemperatur T1 > T0, mit T1≈120°C erhöht wird. Das entsprechende Temperaturniveau wird hierbei für einen Zeitraum t₂ bis t₃ gehalten, bevor die Temperatur in einer nächsten Stufe (Zeitpunkt t₄>t₃) bis zu einer nochmals erhöhten Maximaltemperatur T2, mit T2=175 °C erhöht und dieses erhöhte Temperaturniveau bis zu einem Zeitpunkt t₅ gehalten wird. Danach wird ein langsames Abkühlen bis zu einem Zeitpunkt t₇ gestattet, wobei in der Zwischenzeit auch der Druck p wieder auf Umgebungsdruck abgesenkt wird. Bei der Variante der Figur 9 wird somit der (Kompressions-) Druck p1 über den gesamten Zeitraum to bis t₅, in dem die Temperatur T stufenweise bis zur zweiten Maximaltemperatur T2 erhöht wird, aufgebracht und damit insbesondere bevor die Temperatur über die Mindesttemperatur von ≈70°C angestiegen ist. Eine definierte Verweilzeit (t₃ - t₂) bei der ersten Maximaltemperatur in Höhe von T1≈120°C, dient zum Spannungsausgleich beim Härten, da sichergestellt werden soll, das Werkzeug und Schichtverbund eine ausgeglichene Temperatur aufweisen, bevor die eigentliche Härtung durch die Erhöhung auf die zweite Maximaltemperatur T2=175 °C erfolgt.

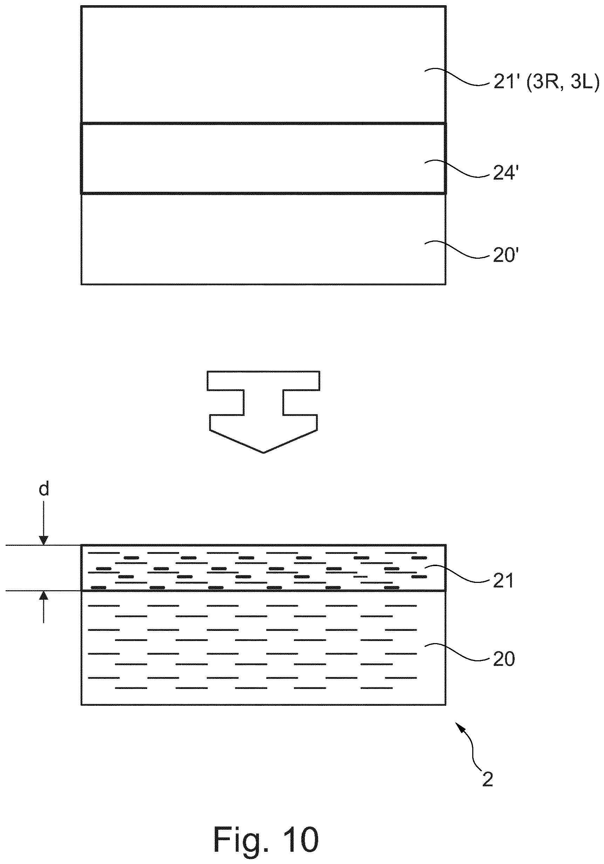

Mitte der Figur 10 ist nochmals schematisch eine Variante für die Herstellung eines Schichtverbunds 2 auf Basis der Temperatur- und Druckverläufe der Figur 9 veranschaulicht. Hierbei ist zwischen eine filzartige Materiallage 21' aus einem intumeszenten, porigen Material, wie z.B. Tecnofire®, bereitgestellt über einen vorgefertigten Rohling 3R, 3L und einer Verbundwerkstofflage 20' eine Harzlage 24' (analog zu der Klebemittellage 22') beispielsweise nach Art eines dünnen Films eingebracht. Infolge der frühzeitigen Kompression wird vor allem die Materiallage 21' aus intumeszenten Material verdichtet und das Harz der Harzlage 24' in diese eindringen, wenn nachfolgend die Temperatur stufenweise erhöht wird. Eine Vermischung des Harzes der Harzlage 24' mit einem Harz aus einem gegebenenfalls vorimprägnierten Prepreg der Verbundwerkstofflage 20' ist hierbei ausgeschlossen oder äußerst gering und nur am Rand der Materiallagen 20' und 21' gegeben. Der damit hergestellte Schichtverbund 2 für das Triebwerksbauteil weist somit an einer äußeren Mantelfläche nur eine dünne, eine Dicke d ≤ 2 mm aufweisende Schicht 21 mit intumeszenten Material und mit dieses abdichtendem und stabilisierendem Harz auf. Das ausgehärtete Harz ist hierbei in der Schicht 21 mit intumeszenten Material homogen verteilt und liegt in der Verbundwerkstoffschicht 20 nur an einem Rand vor, der an die Schicht 21 mit dem intumeszenten Material angrenzt.

Bei den vorstehend erläuterten Ausführungsvarianten der Figuren 8A bis 10 ist die Materiallage 21' des Rohlings 3R, 3L aus intumeszenten Material beispielsweise durch den angelegten Druck p1 auf etwa 1/3 oder 1/4 der ursprünglichen Dicke verdichtet, bevor das stabilisierende Harz eingebracht wird. Die vorherige Kompression der Materiallage 21 aus intumeszenten Material hat sich hierbei insbesondere als vorteilhaft erwiesen, wenn unterschiedliche Harze mit verschiedener Viskositäten in den unterschiedlichen Materiallagen 20', 20a', 20b', 22', 23' und 24' zum Einsatz kommen. Durch die frühzeitige Kompression wird hierbei insbesondere erreicht, dass sich die unterschiedlichen Harze kaum oder nicht vermischen und vor allem das für die Abdichtung und Stabilisierung des komprimierten intumeszenten Materials vorgesehene Harz innerhalb des hergestellten Schichtverbunds 2 maßgeblich nur in der Schicht 21 mit dem intumeszenten Material vorkommt.

### Bezugszeichenliste

- 1: Werkzeug / Autoklav
- 10: Harzzufuhr
- 11: Niederdruckverdichter
- 12: Hochdruckverdichter
- 13: Hochdruckturbine
- 14: Mitteldruckturbine
- 15: Niederdruckturbine
- 2, 2a, 2b: Schichtverbund
- 20: Verbundwerkstoffschicht / Verbundlaminat (Trägermaterial)
- 20': Verbundwerkstofflage / Prepreg (Trägermaterial)
- 20a, 20b: Separate Verbundwerkstoffschicht (Trägermaterial)
- 20a', 20b': Separate Verbundwerkstofflage (Trägermaterial)
- 21: Schicht mit intumeszenten Material
- 21': Materiallage aus intumeszenten Material
- 22': Klebemittellage
- 23: Wabenstrukturschicht
- 23': Wabenlage
- 24': Harzlage
- 30 - 33: Strukturabschnitt
- 33.1: Teilstück
- 33.2: Verbindungsstelle
- 3a, 3b: Seitenteil
- 3M: Fasermatte
- 3R, 3L: Rohling
- 4: Formwerkzeug
- 40 - 43: Strukturgebender Abschnitt
- 400: Gitter- / Siebstruktur
- 5: Behältnis
- 50: Dispersion
- A: Auslass
- B: Bypasskanal
- BK: Brennkammerabschnitt
- C: Austrittskonus
- d: Dicke
- E: Einlass / Intake
- F: Fan
- FC: Fangehäuse
- HK: Hinterkante
- M: Mittelachse / Rotationsachse
- N: Triebwerksgehäuse
- p: (Kompressions-) Druck
- R: Eintrittsrichtung
- RS: Rotorwelle
- T: Turbofan-Triebwerk
- TT: Turbine
- U: Umfangsrichtung
- V: Verdichter
- VK1, VK2: Verkleidung

## Patentansprüche

1. Verfahren zur Herstellung wenigstens eines Teils (3a, 3b) eines Triebwerksbauteils (FC, N, VK1, VK2) mittels eines Rohlings (3R, 3L) aus einem intumeszenten Material, das mindestens eine faserige Matrix aus organischen und/oder anorganischen Fasern und eine intumeszente Substanz enthält,
**wobei**
- der Rohling (3R, 3L) aus einer Fasermatte (3M) aus dem intumeszenten Material mit einer dreidimensionalen Struktur erzeugt wird, die bereits hinsichtlich ihrer Konturen an die Konturen des herzustellenden Teils (3a, 3b) des Triebwerksbauteils (FC, N, VK1, VK2) angepasst ist, und
- der die dreidimensionale Struktur aufweisende Rohling (3R, 3L) durch ein aushärtendes Harz imprägniert und vor oder nach der Imprägnierung mit wenigstens einem Trägermaterial (20, 20a, 20b; 20', 20a', 20b') verbunden wird, das ebenfalls bereits an die Konturen des herzustellenden Teils (3a, 3b) angepasst ist und zusammen mit dem hiermit verbundenen Rohling (3R, 3L) zumindest teilweise das Triebwerksbauteil (FC, N, VK1, VK2) bildet.

2. Verfahren nach Anspruch 1, **dadurch gekennzeichnet, dass** zur Erzeugung der dreidimensionalen Struktur Abschnitte der Fasermatte (3M) umgeformt, aufgetrennt und/oder entfernt werden.

3. Verfahren nach Anspruch 1 oder 2, **dadurch gekennzeichnet, dass** zur Erzeugung der dreidimensionalen Struktur Abschnitte der Fasermatte (3M) miteinander und/oder mit Abschnitten eines weiteren intumeszenten Materials vernäht und/oder verwoben sind.

4. Verfahren nach einem der Ansprüche 1 bis 3, **dadurch gekennzeichnet, dass** der Rohling (3a, 3b) mittels eines Formwerkzeugs (4) hergestellt wird, das hinsichtlich seiner Konturen an die Konturen des herzustellenden Teils (3a, 3b) des Triebwerksbauteils (FC, N, VK1, VK2) angepasst ist und an dem sich in einer Dispersion (50) dispergierte Fasern für die faserige Matrix anlagern.

5. Verfahren nach Anspruch 4, **dadurch gekennzeichnet, dass** das Formwerkzeug (4) eine wasserdurchlässige Gitterstruktur oder Siebstruktur (400) aufweist.

6. Verfahren nach Anspruch 4 oder 5, **dadurch gekennzeichnet, dass** das Formwerkzeug (4) in die Dispersion (50) eingetaucht wird.

7. Verfahren nach einem der Ansprüche 4 bis 6, **dadurch gekennzeichnet, dass** die Dispersion eine mindestens die organischen und/oder anorganischen Fasern, die intumeszente Substanz und ein Bindemittel enthaltene wässrige Aufschlämmung ist.

8. Verfahren nach einem der vorhergehenden Ansprüche, **dadurch gekennzeichnet, dass**
- der Rohling (3R, 3L) und das Trägermaterial (20, 20a, 20b; 20', 20a', 20b') vor der Imprägnierung aufeinandergeschichtet werden und ein Druck (p1) aufgebracht wird, um wenigstens das intumeszente Material des Rohlings (3R, 3L) zu komprimieren, und
- durch das aushärtende Harz das intumeszente Material in seiner komprimierten Form gehalten und gegen ein Eindringen einer Flüssigkeit abgedichtet wird.

9. Verfahren nach Anspruch 8, **dadurch gekennzeichnet, dass** für die Imprägnierung mit dem Harz eine Erwärmung des Rohlings (3R, 3L) und des Trägermaterials (20, 20a, 20b; 20', 20a', 20b') bis wenigstens zu einer Mindesttemperatur (T0) von etwa 70 °C erfolgt.

10. Verfahren nach Anspruch 9, **dadurch gekennzeichnet, dass** der Druck (p1) zum Komprimieren wenigstens des intumeszenten Materials aufgebracht wird, bevor die Mindesttemperatur (T0) erreicht ist.

11. Verfahren nach einem der Ansprüche 8 bis 10, **dadurch gekennzeichnet, dass** ein Autoklav (1) genutzt wird, mittels dem der Druck (p1) zum Komprimieren wenigstens des intumeszenten Materials aufgebracht wird.

12. Verfahren nach einem der vorhergehenden Ansprüche, **dadurch gekennzeichnet, dass** der Rohling (3R, 3L) aus dem intumeszenten Material eine Wanddicke (d) von weniger als 4,2 mm aufweist und/oder eine Wanddicke (d) einer aus dem intumeszenten Material gebildeten Schicht (21) in dem hergestellten Triebwerksbauteil (FC, N, VK1, VK2) 2,3 mm nicht übersteigt, insbesondere eine Wanddicke (d) im Bereich von 0,4 mm bis 1,5 mm aufweist.

13. Triebwerksbauteil für ein Gasturbinentriebwerk (T), bei dem zumindest ein Teil nach einem Verfahren nach einem der Ansprüche 1 bis 12 hergestellt ist.

14. Triebwerksbauteil nach Anspruch 13, **dadurch gekennzeichnet, dass** das Triebwerksbauteil ein Triebwerksgehäuse (N), ein Fangehäuse (FC), eine Wandung eines Bypasskanals (B) oder ein Verkleidungsbauteil (VK1, VK2) für die Einhausung mindestens einer Leitung und/oder einer elektronischen und/oder Fluid führenden Komponente und/oder Baugruppe innerhalb des Triebwerks (T) ist.

## Claims

1. Method for producing at least one part (3a, 3b) of an engine component (FC, N, VK1, VK2) by means of a blank (3R, 3L) from an intumescent material which contains at least one fibre matrix from organic and/or inorganic fibres and one intumescent substance, wherein
- the blank (3R, 3L) is generated from a fibre mat (3M) from the intumescent material so as to have a three-dimensional structure which in terms of the contours thereof is already adapted to the contours of the part (3a, 3b) of the engine component (FC, N, VK1, VK2) to be produced, and
- the blank (3R, 3L) having the three-dimensional structure is impregnated by a curing resin and, prior to or upon impregnation, is connected to at least one carrier material (20, 20a, 20b; 20', 20a', 20b') which is likewise already adapted to the contours of the part (3a, 3b) to be produced and, conjointly with the blank (3R, 3L) connected thereto, forms at least in part the engine component (FC, N, VK1, VK2).

2. Method according to Claim 1, **characterized in that,** for generating the three-dimensional structure, portions of the fibre mat (3M) are formed, cut open, and/or removed.

3. Method according to Claim 1 or 2, **characterized in that,** for generating the three-dimensional structure, portions of the fibre mat (3M) are stitched to and/or interwoven with one another and/or stitched to and/or interwoven with portions of a further intumescent material.

4. Method according to one of Claims 1 to 3, **characterized in that** the blank (3a, 3b) is produced by means of a moulding tool (4) which in terms of the contours thereof is adapted to the contours of the part (3a, 3b) to be produced of the engine component (FC, N, VK1, VK2) and on which fibres for the fibrous matrix that are dispersed in a dispersion (50) are deposited.

5. Method according to Claim 4, **characterized in that** the moulding tool (4) has a water-permeable mesh structure or screen structure (400).

6. Method according to Claim 4 or 5, **characterized in that** the moulding tool (4) is submerged in the dispersion (50).

7. Method according to one of Claims 4 to 6, **characterized in that** the dispersion is an aqueous slurry which contains at least the organic and/or inorganic fibres, the intumescent substance, and a binding agent.

8. Method according to one of the preceding claims, **characterized in that**
- the blank (3R, 3L) and the carrier material (20, 20a, 20b; 20', 20a', 20b') prior to the impregnation are layered on top of one another and a pressure (p1) is applied in order for at least the intumescent material of the blank (3R, 3L) to be compressed, and
- the intumescent material is kept in the compressed shape thereof and is sealed in relation to the ingress of a liquid by the curing resin.

9. Method according to Claim 8, **characterized in that,** for the impregnation with the resin, heating of the blank (3R, 3L) and of the carrier material (20, 20a, 20b; 20', 20a', 20b') is performed up to at least a minimum temperature (T0) of approximately 70°C.

10. Method according to Claim 9, **characterized in that** the pressure (p1) for compressing at least the intumescent material is applied prior to the minimum temperature (T0) being reached.

11. Method according to one of Claims 8 to 10, **characterized in that** an autoclave (1) by means of which the pressure (p1) for compressing at least the intumescent material is applied is utilized.

12. Method according to one of the preceding claims, **characterized in that** the blank (3R, 3L) from the intumescent material has a wall thickness (d) of less than 4.2 mm and/or a wall thickness (d) of a layer (21) formed from the intumescent material in the engine component (FC, N, VK1, VK2) produced does not exceed 2.3 mm, in particular has a wall thickness (d) in the range from 0.4 mm to 1.5 mm.

13. Engine component for a gas turbine engine (T), wherein at least one part is produced by a method according to one of Claims 1 to 12.

14. Engine component according to Claim 13, **characterized in that** the engine component is an engine casing (N), a fan casing (FC), a wall of a bypass duct (B), or a cladding component (VK1, VK2) for the encapsulation of at least one line and/or an electronic and/or fluid conducting component and/or functional group within the engine (T).

## Revendications

1. Procédé de fabrication d'au moins une partie (3a, 3b) d'un composant de propulseur (FC, N, VK1, VK2) au moyen d'une ébauche en un matériau intumescent, qui contient au moins une matrice fibreuse en fibres organiques et/ou inorganiques et une substance intumescente, dans lequel
- on produit l'ébauche (3R, 3L) à partir d'un tapis de fibres (3M) du matériau intumescent avec une structure tridimensionnelle, qui est déjà adaptée au niveau de ses contours aux contours de la partie à fabriquer (3a, 3b) du composant de propulseur (FC, N, WK1, WK2), et
- on imprègne l'ébauche (3R, 3L) présentant la structure tridimensionnelle au moyen d'une résine durcissante et on l'assemble avant ou après l'imprégnation à au moins un matériau de support (20, 20a, 20b; 20', 20a', 20b'), qui est également déjà adapté aux contours de la partie à fabriquer (3a, 3b) et qui forme avec l'ébauche (3R, 3L) assemblée à celui-ci au moins partiellement le composant de propulseur (FC, N, WK1, WK2).

2. Procédé selon la revendication 1, **caractérisé en ce que** l'on déforme, on découpe et/ou on enlève des parties du tapis de fibres (3M) pour la production de la structure tridimensionnelle.

3. Procédé selon une revendication 1 ou 2, **caractérisé en ce que** l'on coud et/ou on tisse des parties du tapis de fibres (3M) l'une à l'autre et/ou à des parties d'un autre matériau intumescent pour la production de la structure tridimensionnelle.

4. Procédé selon l'une quelconque des revendications 1 à 3, **caractérisé en ce que** l'on fabrique l'ébauche (3a, 3b) au moyen d'un outil de moulage (4) qui est adapté au niveau de ses contours aux contours de la partie à fabriquer (3a, 3b) du composant de propulseur (FC, N, WK1, WK2) et sur lequel se déposent les fibres pour la matrice fibreuse dispersées dans une dispersion (50).

5. Procédé selon la revendication 4, **caractérisé en ce que** l'outil de moulage (4) présente une structure de grille ou une structure de tamis (400) perméable à l'eau.

6. Procédé selon une revendication 4 ou 5, **caractérisé en ce que** l'outil de moulage (4) est immergé dans la dispersion (50).

7. Procédé selon l'une quelconque des revendications 4 à 6, **caractérisé en ce que** la dispersion est une suspension aqueuse contenant au moins les fibres organiques et/ou inorganiques, la substance intumescente et un liant.

8. Procédé selon l'une quelconque des revendications précédentes, **caractérisé en ce que**
- on superpose l'ébauche (3R, 3L) et le matériau de support (20, 20a, 20b; 20', 20a', 20b') avant l'imprégnation et on applique une pression (p1), afin de comprimer au moins le matériau intumescent de l'ébauche (3R, 3L), et
- on maintien le matériau intumescent dans sa forme comprimée et on le rend étanche à la pénétration d'un liquide au moyen de la résine durcissante.

9. Procédé selon la revendication 8, **caractérisé en ce que** l'on effectue, pour l'imprégnation avec la résine, un chauffage de l'ébauche (3R, 3L) et du matériau de support (20, 20a, 20b; 20', 20a', 20b') au moins jusqu'à une température minimale (T0) d'environ 70°C.

10. Procédé selon la revendication 9, **caractérisé en ce que** l'on applique la pression (p1) pour comprimer au moins le matériau intumescent avant que la température minimale (T0) soit atteinte.

11. Procédé selon l'une quelconque des revendications 8 à 10, **caractérisé en ce que** l'on utilise un autoclave (1), au moyen duquel on applique la pression (p1) pour comprimer au moins le matériau intumescent.

12. Procédé selon l'une quelconque des revendications précédentes, **caractérisé en ce que** l'ébauche (3R, 3L) en matériau intumescent présente une épaisseur de paroi (d) de moins de 4,2 mm et/ou une épaisseur de paroi (d) de la couche (21) formée par le matériau intumescent dans le composant de propulseur fabriqué (FC, N, WK1, WK2) ne dépasse pas 2,3 mm, en particulier présente une épaisseur de paroi (d) de l'ordre de 0,4 mm à 1,5 mm.

13. Composant de propulseur pour un propulseur à turbine à gaz (T), dans lequel au moins une partie est fabriquée par un procédé selon l'une quelconque des revendications 1 à 12.

14. Composant de propulseur selon la revendication 13, **caractérisé en ce que** le composant de propulseur est un carter de propulseur (N), un carter de soufflante (FC), une paroi d'un canal de dérivation (B) ou un composant d'habillage (VK1, VK2) pour un gainage d'au moins une conduite et/ou d'un composant électronique et/ou transportant un fluide et/ou un module à l'intérieur du propulseur (T).
